(19) Europäisches Patentamt
European Patent Office
Office européen des brevets

(11) EP 1 828 636 B1

(12) EUROPEAN PATENT SPECIFICATION

(45) Date of publication and mention
of the grant of the patent:
09.01.2013 Bulletin 2013/02

(51) Int Cl.:
*F16G 5/16* (2006.01)

(21) Application number: 04808726.6

(22) Date of filing: 23.11.2004

(86) International application number:
PCT/NL2004/000810

(87) International publication number:
WO 2006/057547 (01.06.2006 Gazette 2006/22)

(54) DRIVE BELT WITH TRANSVERSE ELEMENTS AND A BAND SET

ANTRIEBSRIEMEN MIT QUERELEMENTEN UND BANDSATZ

COURROIE DE TRANSMISSION MUNIE D'ELEMENTS TRANSVERSAUX ET D'UN ENSEMBLE DE BASE

(84) Designated Contracting States:
AT BE BG CH CY CZ DE DK EE ES FI FR GB GR HU IE IS IT LI LU MC NL PL PT RO SE SI SK TR

(43) Date of publication of application:
05.09.2007 Bulletin 2007/36

(73) Proprietor: ROBERT BOSCH GMBH
70442 Stuttgart (DE)

(72) Inventors:
• LEMMENS, Marlène, Elisabeth, Inge
NL-5684 JK Best (NL)
• VAN LITH, Johannes, Hendrikus
NL-5258 PL Berlicum (NL)
• VERMEER, Johannes, Adrianus, Maria
NL-5011 XG Tilburg (NL)
• BRANDSMA, Arjen
NL-5045 WN Tilburg (NL)

(74) Representative: Plevier, Gabriel Anton Johan Maria
Bosch Transmission Technology B.V.
PO Box 500
5000 AM Tilburg (NL)

(56) References cited:
EP-A- 0 909 907    EP-A- 1 055 739
EP-A- 1 184 591    EP-A- 1 219 859
EP-A- 1 221 562

# EP 1 828 636 B1

**Description**

The present invention relates to a drive belt as described in the preamble of Claim 1 below.

A drive belt of this type is generally known and is described, for example, in European patent publication EP-A-1 221 562. The drive belt, which is known per se, comprises a series of successively positioned transverse elements and, at least in this example, two sets of a number of relatively thin, continuous metal bands which are stacked in the radial direction, the transverse elements being positioned in the drive belt in such a manner that they can move at least in the circumferential direction of the band sets. A drive belt of this type is in widespread use as a transmission element in continuously variable transmissions, which are otherwise generally known, the drive belt being arranged around and between two pulleys.

It is known that in a transmission of this type the transverse elements, at the location of the two pulleys, i.e. where they are clamped between the sheaves of the pulleys, are subject to a radially outwardly directed radial force which is supported as a normal force on the radially innermost band of the band set, so that a tensile force is generated therein. The radially innermost band will become stretched on account of this tensile force. However, stretching of this nature is counteracted by the presence of the next band in the respective set of bands, i.e. the band which is next to the innermost band. As a result, the said normal force will partially also be supported on the next band, and consequently a tensile force is also generated therein. This play of forces propagates through the entire height of the set, i.e. across all bands of the band set, with the tensile force in theory being distributed uniformly across the bands and the band set consequently overall being stretched to a defined extent. In this case, the normal forces acting on the respective bands decrease uniformly from the level of the radial force on the radially inwardly facing surface, i.e. the inner side, of the radially innermost band, to zero on the radially outwardly facing surface, i.e. the outer side, of the radially outermost band of the band set.

During operation, i.e. when the drive belt is rotating in the transmission, moreover, frictional forces are active between the bands of the band set as a result of a geometrically defined difference in peripheral velocity of the bands. The frictional force acting on the inner or outer side of a band is in this case defined by the product of a coefficient of friction and the locally prevailing normal force. Since the normal force decreases over the height of the set, the inner side of a band is therefore subject to a greater frictional force than the outer side of the said band; this difference between the frictional forces acting on either side of the surface of the band, i.e. shear stresses, represents a mechanical load on the bands. Moreover, the loading mentioned is subject to a periodically recurring variation, i.e. amplitude, during a revolution of the drive belt in the transmission, as a result of the variation which then occurs in the tensile force in the bands. Consequently, the bands are subject to fatigue stresses, which are ultimately the determining factor for the service life of the drive belt

Frictional behaviour of this type leads to the primary conclusion that the frictional loading of the band set should preferably be as low as possible, for example through the use of smooth surfaces in the contact between the transverse elements and the radially innermost band. The fact that in practice there will always be some residual friction in the latter contact leads to the secondary conclusion that the residual frictional force exerted on the band set should preferably be distributed uniformly across all the bands which are present in the set, in order to minimise the load on each band. Therefore, assuming that the normal force acting on each band of the band set is approximately the same, also the coefficient of friction should preferably be the same for all contacts. However, it has been found that such optimum, i.e. uniform coefficient of friction typically occurs only under specific operating conditions, whereas in other operating conditions the radially innermost band is subject to a higher load than the remaining bands of the band set, because in these conditions the coefficient of friction between the innermost band and the elements is higher than the coefficients of friction between this latter band and a subsequent, i.e. adjacent band in the band set. Consequently, the ratio between these coefficients of friction, denoted the coefficient ratio, may considerably differ from 1 in certain operating conditions.

To shift the said coefficient ratio towards 1 in these latter operating conditions, it could potentially be opted to use a network of elevated peaks arranged on one side of the inner side of the bands that is mutually different between the innermost band and the remaining bands of the band set. It should be noted that such networks are known as such and are also referred to as a cross-profile, or simply surface profile in general to encompass a geometry other than the network of peaks which cross one another. It is known that the size and shape characteristics of such surface profile have an influence on the lubrication properties and, therefore, also on the coefficient of friction. However, this type of solution is less than optimum, since it means that two different types of band have to be produced and, moreover, have to be kept separate from one another until the production phase in which the band set is assembled. This means an undesirable increase in production costs and in the risk of the two types of band becoming mixed up.

It is an object of the present invention to provide a drive belt in which a mechanical load on the band set is advantageously distributed uniformly across the bands belonging to the set, while moreover all the bands can be provided with the same roughness and surface profile. To this end, the invention provides the new drive belt design in accordance with Claim 1. The drive belt according to the invention has the advantage of combining a design of the band set which is used in practice and is suitable for efficient mass production with an advantageous distribution of the fatigue load across the bands of the band set, thereby extending the service life of the latter or, for the same service life, allowing heavier loads to be applied to the band set.

According to measurement data on which the present invention is based, the coefficient of friction which is active in the said contact between two bands, at least in the drive belt design according to Claim 1, contrary to expectations has a high value during operation in the transmission, specifically such that the ratio of this coefficient of friction to the coefficient of friction which is active in the frictional contact between the radially innermost band of the band set and the transverse elements, at least in the said latter operating conditions and for a considerable part, if not the majority, of the service life, can advantageously adopt a value virtually equal to 1. Consequently, the total frictional force acting on the band set will be distributed increasingly uniformly across all the bands of the band set, and the mean fatigue load on each band is reduced.

In this context, the invention is based on a novel insight into the frictional behaviour in the contact between two bands, from which a surprising but very useful result was obtained. More particularly, it was discovered that the frictional behaviour between the bands of the band set differs from what can normally be expected in a lubricated frictional contact between two bodies. During experiments, it was discovered that for relatively high values of what is known as the L index, the coefficient of friction between two bands can increase suddenly and to a considerable extent, which contrasts with the frictional behaviour which is generally observed in a lubricated contact between two bodies, is also observed between the radially innermost band and the transverse elements and which, under the conditions described, is characterised by a decreasing coefficient of friction. The L index mentioned is in this case a dimensionless parameter which incorporates the most important parameters characterising the frictional behaviour:

$$L = \frac{\eta_o \cdot \Delta v}{Ra' \cdot p_C} \tag{1}$$

in which $\eta_0$ is the dynamic viscosity of the lubricant used, $\Delta v$ is the difference in velocity between the bodies, $p_c$ is the contact pressure exerted in the frictional contact and Ra' is the combined surface roughness of the bodies, which is defined here as:

$$Ra' = \sqrt{(Ra_1)^2 + (Ra_2)^2} \tag{2}$$

in which $Ra_1$ and $Ra_2$ represent the surface roughness of the respective body.

It has also been discovered that the higher the combined surface roughness between the bands, the earlier an increase in the coefficient of friction of this nature occurs, i.e. it occurs at a lower value of the L index, and the more constant the coefficient of friction becomes, i.e. irrespective of the operation conditions as expressed in the L index.

Therefore, according to the invention the use of the relatively high combined surface roughness of the bands makes it possible for the said coefficient ratio advantageously to be virtually equal to 1 without the surface profile of the radially innermost band having to deviate from that of the other bands.

An additional advantage of a drive belt of this type is that, in combination with a band set with at least some play in the radial direction between its bands, the coefficient of friction which is active in the separate frictional contacts between the bands increases in the radial direction from the inside outwards over the height of the band set. As a result, the radially innermost band, which is normally subject to the highest mechanical loads, of the band set is at least to some extent relieved of this load. This latter aspect of the drive belt according to the invention is described in more detail in the Dutch patent application bearing number NL-1023858, which was not published before the priority date of the present application.

According to the invention, at least in combination with the transmission and drive belt design which is typical in the automotive industry, for this purpose a combined surface roughness of approximately 0.9 to 1.4 $\mu$m - in accordance with what is known as the CLA-standard - should be used in the contact between the various bands. A surface profile is applied to one side. Approximately the same values also apply to the separate surface roughness on the side of the band provided with the profile, since the surface roughness of the other side, i.e. the smooth side, of the band is less than 0,2 micrometer. It should be noted that although above-mentioned range for the combined surface roughness is known from European patent publication EP-A-1 219 859, this only applies to the frictional contact between the radially innermost band and the transverse elements, and also with a view to achieving a specific objective. Therefore, when it is compared with drive belts which are currently in production and use and in which a combined surface roughness between the bands is in the range from 0.3 to 0.8 micrometre, the present invention involves an increase in the combined surface roughness, which will be contrary to the instincts of the person skilled in the art, who for various reasons will in fact endeavour to reduce the frictional forces, as has been described, for example, in the above-mentioned publication EP-A-1 221 562.

The invention will be explained in more detail below with reference to the figures, with further discussion of embodiments thereof.

Figure 1 shows a simplified, partially cut-away view of a continuously variable transmission provided with two pulleys and a drive belt.

Figure 2 shows part of the drive belt from Figure 1 provided with two band sets and transverse elements.

Figure 3 shows a simplified side view of a transverse element and a band set including a representation of the forces acting on and from a band set.

Figure 4 shows both a diagrammatic perspective and a highly simplified cross section A-A of a single band 32 of the band set 31, provided with a surface profile.

Figure 5 shows a graph based on measurement results in which a coefficient of friction between a radially innermost band of a band set and the transverse elements is related to a parameter which characterises this coefficient of friction.

Figure 6 shows a graph based on measurement results in which a coefficient of friction between two adjacent bands of a band set is related to a parameter which characterises this coefficient of friction.

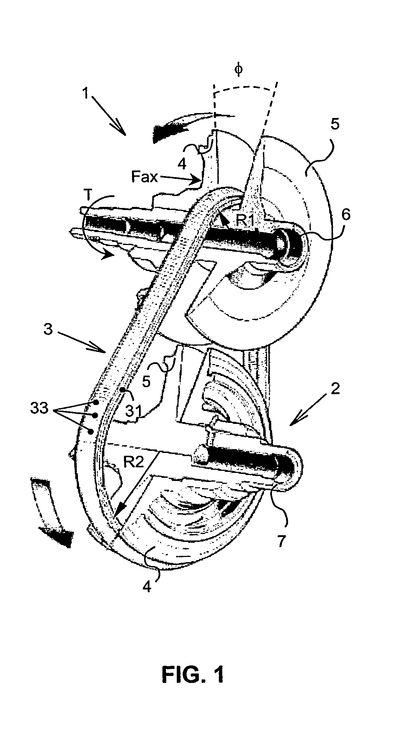

Figure 1 shows the main parts of a continuously variable transmission as used in the drive of, for example, passenger cars. The transmission is generally known per se and comprises two pulleys 1, 2, which each comprise two pulley sheaves 4, 5 and between which there is positioned a drive belt 3. The pulley sheaves 4, 5 are substantially conical in form, and at least one sheave 4 of a pulley 1, 2 can be displaced in the axial direction along a shaft 6, 7 of the respective pulley 1, 2. Furthermore, the transmission includes activation means (not shown in the figure) which are generally electronically controllable and hydraulically acting and which are able to apply an axial force Fax to the said one sheave 4, in such a manner that the drive belt 3 is clamped between the sheaves 4, 5 of the respective pulley 1, 2 and a driving force of a driven shaft 6, i.e. the supplied torque T, is transmitted, with the aid of friction in the conical contact surface between the sheaves 4, 5 and the drive belt 3, from a driving pulley 1 to a driven pulley 2. A transmission ratio of the transmission is determined by the quotient of an effective running radius R2 of the drive belt 3 between the sheaves 4, 5 of the driven pulley 2 and an effective running radius R1 of the drive belt 3 between the sheaves 4, 5 of the driving pulley 1.

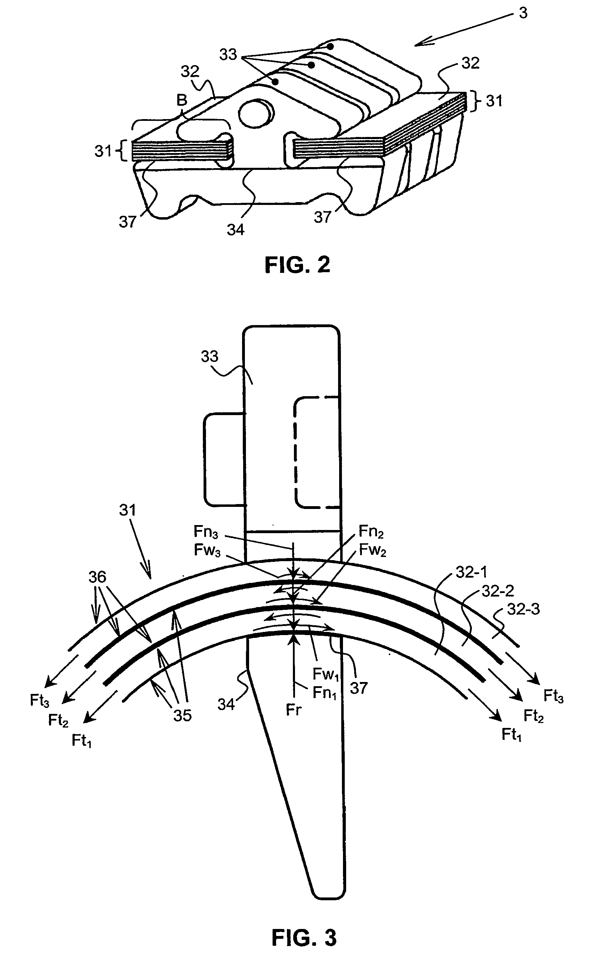

The drive belt 3, of which part is illustrated in more detail in Figure 2, in this example comprises two band sets 31, each comprising an assembly of nested, relatively thin and continuous metal rings or bands 32, which together form a carrier for a series of metal transverse elements 33 and which absorb the clamping force Fax which is respectively exerted between the sheaves 4, 5 of the two pulleys 1, 2. To allow the transverse elements 33 to tilt with respect to one another on the pulley, the transverse elements are provided, in the transverse direction, with what is known as a tilting line 34, beneath which the transverse element tapers. A type of drive belt 3 of this nature is also known as the Van Doorne push belt and is described in more detail, for example, in European patent EP-A-0 626 526. The drive belt 3 functions by virtue of the transverse elements 33 moving towards the driven pulley 2 as a result of a rotation of the driving pulley 1, pushing one another onwards with guidance from the band sets 31. In this way, the driven pulley 2 is set in rotation and the transverse elements 33 are then returned to the driving pulley 2, etc.

On account of the conical shape of the sheaves 4, 5, some of the axial force Fax is exerted as a radially oriented force component Fr on the transverse elements 33. This force component Fr is exerted on the band sets 31 via contact or bearing surfaces 37 of the transverse elements 33, which are intended for contact with the radially inwardly facing main side 35 of the radially innermost band 32-1 of the band set 31, in the form of normal forces Fn, so that a tensile force Ft for each band 32 is produced therein. All this is diagrammatically illustrated in Figure 3 for a band set 31 which comprises three bands 32-1, 32-2 and 32-3. Figure 3 also illustrates the frictional forces Fw which occur between the transverse elements 33 and the radially innermost band 32-1 of a band set 31 and between the respective bands 32 while the drive belt 3 is operating in the transmission. The radial thickness of the bands 32 has been exaggerated in the illustration, for the sake of clarity.

As has already been noted, in the theoretical situation in which it is assumed that the bands 32 precisely adjoin one another in the radial direction, the normal forces Fn acting on the bands 32 on the radially inwardly facing side, i.e. the inner side 35, will decrease uniformly across the band set 31 from the level of the said radial component Fr on the inner side 35 of the radially innermost band 32-1 to zero on the radially outwardly facing side, i.e. the outer side 36, of the radially outermost band 32-3. The frictional force $Fw_x$ acting on the inner side 35 of the x-th band from a band set 31 which comprises in total z bands 32 is in this context defined by:

$$Fw_x = Fn_x \cdot \mu_x \qquad\qquad (3)$$

In the above, x=1 denotes the radially innermost band 32-1 from the set 31, and the respective normal force $Fn_X$ is defined by:

$$Fn_x = \frac{z - (x-1)}{z} \cdot Fr \qquad\qquad (4)$$

Therefore, with a constant coefficient of friction $\mu$, the frictional force Fw will exhibit a uniform decrease illustrated by the length of the arrows shown in Figure 3 across the z number of bands 32-x of the band set.

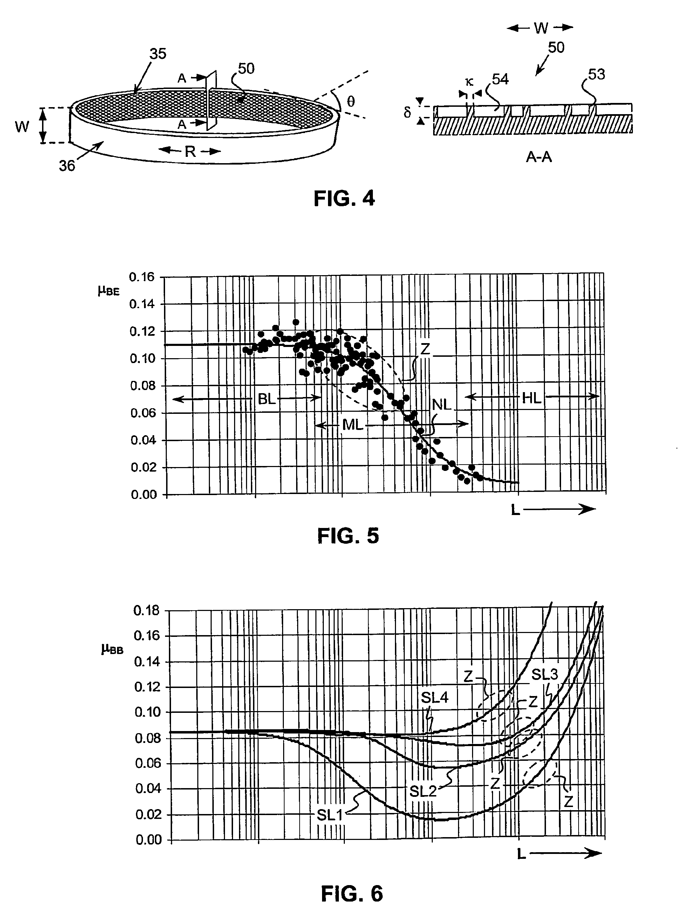

However, it is known that the coefficient of friction $\mu$ is not a material constant, but rather will vary considerably as a function of a number of parameters which characterise the friction, so that the desire for a constant coefficient of friction $\mu$ as expressed above can in practice be realised indirectly by influencing these parameters in a suitable way. In addition to the geometry of the surface profile 50 of the bands 32, according to the known theory these parameters, at least in a lubricated frictional contact between two bodies, also include the parameters in the L index from equation (1) above. One example of a surface profile 50 of this type is illustrated in Figure 4, both in the form of a diagrammatic perspective view and in the form of a greatly simplified cross section A-A. The surface profile 50 shown is a cross-profile which comprises a network of elevated peaks 53 which cross one another and in this example extend at an angle $\theta$ with respect to a circumferential direction are of the band 32 across a width direction W thereof. The parameters which characterise the cross-profile are, according to the invention, the above-mentioned angle $\theta$, a width or transverse dimension $\kappa$ of the peaks 53, a height $\delta$ of the peaks 53 with respect to lower valley regions 54 and a ratio $\sigma$ -not illustrated- between the cumulative dimension of the peaks 53 and that of the valley regions 54, at least measured over the circumferential direction R of the band 32 perpendicular to the width direction W thereof.

Furthermore, it is known that as the L index increases, the coefficient of friction $\mu$ decreases, with the friction conditions changing from what are known as boundary lubrication conditions "BL", via what are known as mixed lubrication conditions "ML", to the hydrodynamic lubrication conditions "HL", as illustrated by the continuous curve "NL" in Figure 5. Frictional conditions of this type are indeed measured in the frictional contact between the transverse elements 33 and the band sets 31, as is also indicated by means of measured values in Figure 4. Therefore, it can be expected from the definition of the L index (cf. eq. (1)) and Figure 5 that for a given combined surface roughness Ra' the coefficient of friction $\mu$ will be at its highest at a relatively high contact pressure $p_c$ between the bodies and will decrease with a decreasing contact pressure $p_c$ between them.

In the present drive belt 3, which is made entirely from metal, the contact pressure $p_c$ between the bands 32 is considerably lower than the contact pressure between the radially innermost band 32-1 and the transverse elements 33, on account of the fact that the former frictional contact takes place over the more or less continuous surfaces of the bands 32, so that a normal force Fn which is present between them is distributed uniformly and over a relatively large surface area, whereas in the other frictional contact a large number of transverse elements 33 are acting on the innermost band 32-1 separately and with spaces between them so that the same normal force Fn is now in fact exerted very locally. Consequently, at least for the standard design of the drive belt 3 and that of the transmission in which it is used, the L index will be higher in the first frictional contact described than in the latter frictional contact described. It must therefore be expected that the coefficient of friction $\mu_{BB}$ in the former frictional contact will be lower than the coefficient of friction $\mu_{BE}$ in the latter frictional contact. In addition, adjustment to the L index, for example by altering the design of the drive belt 3 or that of the transmission, leads to a change in the coefficients of friction $\mu_{BE}$, $\mu_{BB}$ in a corresponding direction (i.e. both increase or both decrease), and consequently the expectation is that it is not possible to greatly influence the above-mentioned coefficient ratio between them. Therefore, it would appear beforehand that only the solution in which the radially innermost band 32-1 is provided with a different surface roughness Ra, and/or surface profile 50 from the other bands 32 could work, since this allows the L index in the two frictional contacts to be influenced independently of one another.

However, measurements on which the present invention is based have shown that the frictional behaviour between the bands 32 deviates significantly from what would be expected on the basis of theoretical considerations. Figure 6 plots the measured frictional behaviour between two bands 32, the curves "SL1", "SL2", "SL3" and "SL4" being plotted on the basis of measurement results measured for bands 32 with a cross-profile 50 on one side for various values of the combined surface roughness Ra' in the contact between the bands 32, specifically 0.1 $\mu$m, 0.4 $\mu$m, 0.9 $\mu$m and 1.2 $\mu$m, respectively.

The unexpectedly different shape, and in particular the strong increase in the respective curves SL1, SL2, SL3 and SL4 with respect to the expected curve NL in the extreme right-hand part thereof is as far as the Applicant is currently aware caused by the particular feature whereby the frictional contact between the bands 32 is continuous in the circumferential direction and also the direction of movement between the bands, so that a lubricant can only flow into the said contact from the sides of the bands 32, which limits the layer or film thickness of the lubricant which is present between the bands 32 of the set 31 during normal operation. Therefore, the hypothesis is that the said film thickness increases less quickly with the differential velocity $\Delta v$ than a proportional increase as represented by the curve NL. The coefficient of friction $\mu$ will then in fact increase relatively quickly with an increasing differential velocity $\Delta v$, for example because flow turbulence in the lubricant which occurs in the vicinity of the surfaces 35, 36 of the frictional contact, on account of the relatively low film thickness, has a considerable influence on the overall frictional behaviour. Moreover, it has been observed that the geometry of the above-mentioned surface profile has a relatively great influence on the friction, which is probably caused by its influence on the said flow turbulence and film thickness.

On account of the known and available information about the friction conditions, it was not obvious to investigate an option of this nature, namely an increase in the combined surface roughness Ra', and consequently the differing frictional behaviour shown in Figure 6 has not previously been described.

According to the present invention, it can be concluded from a comparison of Figures 5 and 6 that in the drive belt 3:

1) the coefficient of friction $\mu_{BE}$ which is active in the frictional contact between the radially innermost band 32-1 of the band set 31 and the transverse elements 33 can be related in a more or less "conventional" way to the value of the L index, this coefficient substantially decreasing with an increasing value of the L index. It should be noted that in the above-mentioned hydrodynamic lubrication conditions HL a slight increase, which is negligible within the context of the invention, may follow; and that

2) the coefficient of friction $\mu_{BB}$ which is active in the frictional contact between the individual bands 32 of the band set 31 cannot be related in the known way to the value of the L index; this coefficient can increase considerably as the value of the L index increases. In this case, an increase in the combined surface roughness Ra' in the frictional contact on the one hand leads to an increase in the coefficient of friction $\mu_{BB}$ in absolute terms and on the other hand to the earlier occurrence of the said increase in this coefficient, i.e. to this increase occurring at a lower value of the L index.

Therefore, according to the invention it is possible, by using a relatively high combined surface roughness Ra' between the bands 32 (cf. curve SL4), to realise a coefficient of friction $\mu_{BB}$ between them which substantially corresponds in an advantageous way to the coefficient of friction $\mu_{BE}$ between the radially innermost band 32-1 and the transverse elements 33, at least during a considerable proportion, if not the majority of the total service life of the drive belt 3. According to the invention, correspondence of this nature, at least in combination with the transmission and drive belt design which is typically used in the automotive industry, occurs with a combined surface roughness Ra' of the bands in the range from 0.9 to 1.4 $\mu$m. In particular when the highest values from this range are employed, the above-mentioned coefficient ratio will even be able to reach a value of lower than 1, in which case the radially innermost band is even advantageously relieved of load compared to the other bands.

It is preferable for the combined surface roughness Ra' to be substantially determined by a cross-profile 50 applied to one main side 35, 36, preferably the inner side 35, of the bands 32, with the other main side 35, 36 being made relatively smooth, with a surface roughness Ra of less than 0.2 $\mu$m. According to the experiments on which the present invention is based, the above-mentioned parameters which characterise the cross-profile 50, namely the angle $\theta$, the height $\delta$ and the transverse dimension $\kappa$ of the peaks 53 and the ratio $\sigma$, in this case have a value in the respective ranges from 20 to 70 degrees, from 2 to 14 $\mu$m, from 1 to 200 $\mu$m and from 0.04 to 0.4.

In this context, it should also be noted that if the said transverse dimension $\kappa$ has a relatively low value, for example less than 20 $\mu$m, the cross-profile itself is to a significant extent the determining factor for the surface roughness Ra of the respective main side 35 of the band 32, i.e. in that case the combined surface roughness Ra' of the bands 32 is influenced by the geometry of the cross-profile 50 itself. On the other hand, if a coarser cross-profile 50 is selected, in which, for example, the transverse dimension $\kappa$ is greater than 100 $\mu$m, which it should be noted is eminently suitable in accordance with the present invention, the influence of the cross-profile 50 on the surface roughness Ra of the respective main side 35 of the band 32 decreases considerably, and this roughness is instead increasingly determined by the roughness of the surface of the valley regions 54 and of the tops of the peaks 53. At least partial decoupling of the geometry of a surface profile 50 of the respective main side 35 and the surface roughness Ra thereof of this nature may be advantageous according to the invention for the design and in the manufacturing process of the drive belt 3, since there is then substantially no disruptive and unpredictable interaction between the said profile geometry and the coefficients of friction $\mu_{BE}$, $\mu_{BB}$ via the combined surface roughness Ra'.

The range 'Z' for the L index and the coefficient of friction $\mu_{BE}$ between the transverse elements 33 and the band set 31 which occurs in practice is illustrated in Figure 5, while Figure 6 shows a similar 'Z' range which occurs in practice for each curve separately for the coefficient of friction $\mu_{BB}$ between individual bands 32. The former 'Z' range extends over a considerable area, it being possible for the value of the corresponding coefficient of friction $\mu_{BE}$ which occurs in practice to vary between 0.12 and 0.06 to 0.07. The lowest values can in this case be measured in particular towards the end of the service life of the drive belt 3, probably as a result of wear and the associated decrease in the combined roughness Ra' in the corresponding frictional contact. In addition, as has been described in EP-A-1 221 562, the shape of the bearing surface 37 of the transverse elements 33 for the band set 31 in the longitudinal direction of the drive belt 3 and the position of the tilting line 34 with respect to the band set 31 both have an influence on the corresponding coefficient of friction $\mu_{BE}$; by way of example, a bearing surface 37 which is straight in the said direction leads to a higher value thereof compared to a rounded or arcuate bearing surface 37.

If this value of coefficient of friction $\mu_{BE}$ between the transverse elements 33 and the band set 31 which occurs in practice is compared with that of the coefficient of friction $\mu_{BB}$ between the individual bands 32, namely from 0.07 to 0.08 to 0.09, as indicated in particular by the 'Z' range of curve SL2, it is found that in practice there is already an overlap between the two values, so that the above-mentioned coefficient ratio $\mu_{BE}/\mu_{BB}$ under certain specific conditions during operation has a value equal to 1. Still, frequently also operating conditions occur wherein such ratio differs from 1.

Using the measure according to the invention, namely the use of a relatively high combined roughness Ra' in the frictional contact between the individual bands 32 (from 0.9 $\mu$m, i.e. from curve SL3), means that the coefficient of friction $\mu_{BB}$ between the individual bands 32 better corresponds to the coefficient of friction $\mu_{BE}$ between the transverse elements 33 and the band set 31 which occurs in practice, resulting in a coefficient ratio $\mu_{BE}/\mu_{BB}$ which is virtually equal to 1 for a relatively large proportion of the total service life. Also, the coefficient of friction $\mu_{BB}$ between the individual bands 32 favourably becomes more uniform, i.e. is less dependent on the operational conditions, e.g. as expressed per equation (1) above. Moreover, the measure according to the invention also makes it possible for the said bearing surface 37 of the transverse elements 33 to be made virtually straight in the longitudinal direction of the drive belt 3, or for the tilting line 34 to be positioned in the immediate vicinity of the band set 31. This is because the associated relatively high value of the coefficient of friction $\mu_{BE}$ between the transverse elements 33 and the band set 31 is compensated for by the relatively high value of the coefficient of friction $\mu_{BB}$ between the individual bands 32 as a result of the relatively high combined roughness Ra' in accordance with the invention in the frictional contact between the individual bands 32.

If the higher combined surface roughness Ra' is realised by increasing the surface roughness Ra on the inner side of the bands 32, where the surface profile 50 applied to one side is generally located, this will of course also have an influence on the frictional contact between the radially innermost band 32-1 and the transverse elements 33. After all, for this frictional contact the L index decreases slightly in accordance with equation (1), and the coefficient of friction $\mu_{BE}$ increases slightly (cf. Figure 4). However, in practice it has been found that the latter increase is less than that of the coefficient of friction $\mu_{BB}$ between the individual bands 32, and moreover during operation this is partially compensated for by increased initial wear of the frictional contacts in the drive belt 3 during a relatively short run-in phase of the overall service life. This is because the said initial wear is greatest in the frictional contact between the transverse elements 33 and the radially innermost band 32-1, probably on account of a difference in surface hardness between them. It should also be noted that this wear leads to a reduction in the combined surface roughness Ra' and therefore according to equation (1) leads to an increase in the L index.

Moreover, the combined surface roughness Ra' between the radially innermost band 32-1 and the transverse elements 33 can be reduced by lowering the surface roughness Ra of the transverse elements 33, or at least of the bearing surface 37 thereof, from the customary value of approximately 0.4 $\mu$m to a value of less than 0.3 $\mu$m, preferably less than 0.2 $\mu$m, for example by polishing or coating the said bearing surface 37.

According to the invention, the most optimum correspondence between the said coefficients of friction $\mu_{BE}$, $\mu_{BB}$ is at least achieved in what is known as the overdrive full-load situation of the drive belt 3 when used in the transmission, which is characterised by the smallest possible effective running radius R2 of the drive belt 3 between the sheaves 4, 5 of the driven pulley 2, and the maximum values, under this condition, of the supplied torque T and of a rotational speed of the drive belt 3.

It should be noted that the coefficient of friction $\mu$ which is active between two bands 32 of the band set 31 are in this case measured with the aid of a measurement method in which the band set 31 is stretched around two cylindrical rollers driven in rotation on a test bench by these rollers being pushed away from one another with a defined stressing force. It is preferable for the dimension or radius of the rollers in this case to correspond to the effective running radii R1 and R2 of the drive belt 3 in the transmission during the most critical load, i.e. the said full load situation thereof, which preferably also applies to the speed at which the first roller is rotated.

As a result of the difference in effective running radius between the innermost band 32-1, which is in contact with the rollers, and the other bands 32 of the band set 31, a difference in circumferential velocity $\Delta v$ between the respective bands 32 is established automatically, in the same way as during operation in the transmission. If appropriate, the respective second roller, which is generally the roller having the smaller radius, can be driven in such a manner that the difference in circumferential velocity between this roller and that of the inner side 35 of the radially innermost band

32-1 of the band set 31 is formed in accordance with the difference in velocity which occurs during the full-load situation in the drive belt 3 between the latter inner side 35 and the transverse elements 33. The stressing force is preferably also selected in such a manner that, at least at the location of the second roller, the latter inner side 35 is subject to a normal force Fn1 which corresponds to the said radial force as occurs during the full-load situation in the drive belt 3.

It is then possible to determine the coefficient of friction $\mu$ which is actually acting on the inner side 35 of a band 32, on account of the fact that the amplitude of the tensile force Ft over the circumference of a band 32, i.e. the maximum tensile force $Ft_{MAX}$ occurring minus the minimum tensile force $Ft_{MIN}$ occurring satisfies the following equation:

$$\left(Ft_{MAX} - Ft_{MIN}\right) = e^{\mu\alpha} \tag{5}$$

In the above, $\alpha$ is the angle at which the band set 31 is in contact with the smaller of the two rollers. Since the tensile force Ft is determined by the product of the Young's modulus of elasticity E of the band 32, the surface area S of a cross section oriented perpendicular to the circumferential direction of the band 32 and the measured elongation $\varepsilon$ of the band, equation (5) can be written as:

$$\mu = \frac{\ln\left[(\varepsilon_{MAX} - \varepsilon_{MIN}) \cdot E \cdot S\right]}{\alpha} \tag{6}$$

In the above, $\varepsilon_{MAX}$ and $\varepsilon_{MIN}$ respectively denote the maximum and minimum value for the elongation $\varepsilon$ of the band, measured over the circumference of the band 32, for example with the aid of a strain gauge.

Since with existing techniques, such as the said strain gauge measurement, it is difficult or even impossible to measure the said elongation $\varepsilon$ of the bands 32 other than the radially outermost band 32-3, the present invention also proposes the following method, which is more simple to implement and in which:

- the normal force $Fn_B$ acting on the outermost band 32 of the band set 31 is determined using the measurement method described above;
- the said outermost band 32 is removed from the band set 31, so that what was previously the outermost band 32 but one in the band set 31 is now located furthest outwards in the radial direction, i.e. has become the outermost band 32 of the remaining set of strips;
- the said stressing force which leads to the radial force Fr applied to the complete band set 31 is reduced by the factor $(Fr-Fn_B)/Fr$; and in which
- the above three steps are repeated for the outermost band 32 of the band set remaining in each instance, until the set comprises just a single band 32, namely the innermost band 32-1 of the original, complete band set 31.

Generally, however, a sufficiently accurate result can also be obtained using a simplification of the above measurement method. In this case, the band set 32 comprises just two bands 32 and the measurement is carried out at an easily realisable value of the above-mentioned parameters which characterise the frictional behaviour to the extent that these parameters together, in accordance with equation (1), determine an L index with a value which corresponds to a value of this index which occurs during operation.

**Claims**

1. Drive belt (3) for use in a continuously variable transmission, such as for passenger cars, with two pulleys around which the drive belt (3) is positioned, which drive belt (3) comprises a continuous band set (31) on which a large number of transverse elements (33) are arranged, which elements can move along the band set (31) at least in a circumferential direction thereof, the band set (31) being provided with at least two adjacent, relatively thin metal bands (32), which are nested together in the radial direction and each have a radially inwardly facing main side (35) and a radially outwardly facing main side (36), whereof one main side (35; 36) of each band is provided with a surface profile (50) and the respective other one main side (35; 36) of each band is without such surface profile, each main side (35, 36) defining a surface roughness, which main sides (35, 36) of each band together define a combined surface roughness Ra', which is in the range of 0,9 and 1,4 micrometer, **characterised in that** the surface roughness in Ra of the said respective other one main side (35; 36) is less than 0.2 micrometer.

2. Drive belt according to Claim 1, **characterised in that** the surface roughness in Ra of the said one main side (35; 36) with the surface profile (50) is 1.2 micrometer.

3. Drive belt according to Claim 1, **characterised in that** the surface roughness in Ra of the said one main side (35; 36) with the surface profile (50) is 1.4 micrometer.

4. Drive belt (3) according to one of the preceding claims, **characterised in that** the said one main side (35; 36) the surface profile is the radially inwardly facing main side (35) of the metal bands (32).

5. Drive belt (3) according to one of the preceding claims, **characterised in that** the surface profile (50) comprises a network of elevated peaks (53) which are oriented crosswise and have valley regions (54) between them.

6. Drive belt (3) according to one of the preceding claims, **characterised in that** a bearing surface (37) of the transverse elements (33) that is intended for contact with the radially inwardly facing main side (35) of the radially innermost band (32-1) of the band set (31) is provided with a surface roughness in Ra of less than 0.3 micrometer.

7. Drive belt (3) according to one of the preceding claims, **characterised in that** a bearing surface (37) of the transverse elements (33) that is intended for contact with the radially inwardly facing main side (35) of the radially innermost band (32-1) of the band set (31) at least substantially describes a straight line in the longitudinal direction of the drive belt (3).

8. Drive belt (3) according to one of the preceding claims, **characterised in that**, at least in the absence of a tensile stress in the bands (32), there is some play in the radial direction between the separate bands (32) of the band set (31).

9. Continuously variable transmission (1, 2, 3) provided with the drive belt (3) according to one of the preceding claims.

**Patentansprüche**

1. Antriebsriemen (3) für die Verwendung in einem stufenlos feststellbaren Getriebe etwa für Personenkraftwagen, mit zwei Riemenscheiben, um die der Antriebsriemen (3) angeordnet ist, wobei der Antriebsriemen (3) eine ununterbrochene Bandgruppe (31) umfasst, auf der eine große Anzahl von Querelementen (33) angeordnet sind, wobei sich die Elemente längs der Bandgruppe (31) wenigstens in deren Umfangsrichtung bewegen können, wobei die Bandgruppe (31) mit wenigstens zwei benachbarten, verhältnismäßig dünnen Metallbändern (32) versehen ist, die in radialer Richtung ineinander verschachtelt sind und jeweils eine radial einwärts weisende Hauptseite (35) und eine radial auswärts weisende Hauptseite (36) besitzen, wobei eine Hauptseite (35; 36) jedes Bandes mit einem Oberflächenprofil (50) versehen ist und die jeweils andere Hauptseite (35; 36) jedes Bandes kein solches Oberflächenprofil aufweist, wobei jede Hauptseite (35; 36) eine Oberflächenrauheit definiert, wobei Hauptseiten (35; 36) jedes Bandes zusammen eine kombinierte Oberflächenrauheit Ra' definieren, die im Bereich von 0,9 bis 1,4 Mikrometer liegt, **dadurch gekennzeichnet, dass** die Oberflächenrauheit Ra der jeweils anderen Hauptseite (35; 36) kleiner als 0,2 Mikrometer ist.

2. Antriebsriemen nach Anspruch 1, **dadurch gekennzeichnet, dass** die Oberflächenrauheit Ra der Hauptseite (35; 36) mit dem Oberflächenprofil (50) 1,2 Mikrometer beträgt.

3. Antriebsriemen nach Anspruch 1, **dadurch gekennzeichnet, dass** die Oberflächenrauheit Ra der einen Seite (35; 36) mit dem Oberflächenprofil (50) 1,4 Mikrometer beträgt.

4. Antriebsriemen (3) nach einem der vorhergehenden Ansprüche, **dadurch gekennzeichnet, dass** die eine Seite (35; 36) mit dem Oberflächenprofil (50) die radial einwärts weisende Hauptseite (35) der Metallbänder (32) ist.

5. Antriebsriemen (3) nach einem der vorhergehenden Ansprüche, **dadurch gekennzeichnet, dass** das Oberflächenprofil (50) ein Netzwerk erhöhter Spitzen (53) umfasst, die kreuzweise orientiert sind und zwischen sich Talbereiche (54) besitzen.

6. Antriebsriemen (3) nach einem der vorhergehenden Ansprüche, **dadurch gekennzeichnet, dass** eine Auflageoberfläche (37) der Querelemente (33), die für einen Kontakt mit der radial einwärts weisenden Hauptseite (35) des radial innersten Bandes (32-1) der Bandgruppe (31) vorgesehen ist, mit einer Oberflächenrauheit Ra von weniger als 0,3 Mikrometer versehen ist.

7. Antriebsriemen (3) nach einem der vorhergehenden Ansprüche, **dadurch gekennzeichnet, dass** eine Auflageoberfläche (37) der Querelemente (33), die für einen Kontakt mit der radial einwärts weisenden Hauptseite (35) des radial innersten Bandes (32-1) der Bandgruppe (31) bestimmt ist, in Längsrichtung des Antriebsriemens (3) wenigstens im Wesentlichen eine gerade Linie beschreibt.

8. Antriebsriemen (3) nach einem der vorhergehenden Ansprüche, **dadurch gekennzeichnet, dass** zumindest bei Fehlen einer Zugbeanspruchung in den Bändern (32) ein gewisses Spiel in radialer Richtung zwischen den getrennten Bändern (32) der Bandgruppe (31) vorhanden ist.

9. Stufenlos verstellbares Getriebe (1, 2, 3), das mit dem Antriebsriemen (3) nach einem der vorhergehenden Ansprüche versehen ist.

**Revendications**

1. Courroie de transmission (3) pour l'utilisation dans une transmission à variation continue, telle que pour des voitures de tourisme, comprenant deux poulies autour desquelles la courroie de transmission (3) est positionnée, laquelle courroie de transmission (3) comprend un ensemble de bande continue (31) sur lequel un grand nombre d'éléments transversaux (33) sont agencés, lesquels éléments peuvent se déplacer le long de l'ensemble de bande (31) au moins dans une direction circonférentielle de celui-ci, l'ensemble de bande (31) étant pourvu d'au moins deux bandes métalliques relativement minces (32) adjacentes, qui sont emboîtées l'une dans l'autre dans la direction radiale et qui ont chacune un côté principal tourné radialement vers l'intérieur (35) et un côté principal tourné radialement vers l'extérieur (36), un côté principal (35 ; 36) de chaque bande étant pourvu d'un profilé de surface 950) et l'autre côté principal respectif (35 ; 36) de chaque bande n'étant pas pourvu d'un tel profilé de surface, chaque côté principal (35 ; 36) définissant une rugosité de surface, lesquels côtés principaux (35 ; 36) de chaque bande définissent ensemble une rugosité de surface combinée Ra' de l'ordre de 0,9 à 1,4 micron, **caractérisée en ce que** la rugosité de surface en Ra dudit autre côté principal respectif (35 ; 36) est inférieure à 0,2 micron.

2. Courroie de transmission selon la revendication 1, **caractérisée en ce que** la rugosité de surface en Ra dudit côté principal (35 ; 36) ayant le profilé de surface (50) est de 1,2 micron.

3. Courroie de transmission selon la revendication 1, **caractérisée en ce que** la rugosité de surface en Ra dudit côté principal (35 ; 36) ayant le profilé de surface (50) est de 1,4 micron.

4. Courroie de transmission selon l'une quelconque des revendications précédentes, **caractérisée en ce que** ledit côté principal (35 ; 36) ayant le profilé de surface est le côté principal tourné radialement vers l'intérieur (35) des bandes métalliques (32).

5. Courroie de transmission (3) selon l'une quelconque des revendications précédentes, **caractérisée en ce que** le profilé de surface (50) comprend un réseau de pics élevés (53) qui sont orientés transversalement et qui ont des régions de vallée (54) entre eux.

6. Courroie de transmission (3) selon l'une quelconque des revendications précédentes, **caractérisée en ce qu'**une surface de palier (37) des éléments transversaux (33) qui est prévue pour venir en contact avec le côté principal tourné radialement vers l'intérieur (35) de la bande la plus interne radialement (32-1) de l'ensemble de bande (31) est pourvue d'une rugosité de surface en Ra inférieure à 0,3 micron.

7. Courroie de transmission (3) selon l'une quelconque des revendications précédentes, **caractérisée en ce qu'**une surface de palier (37) des éléments transversaux (33) qui est prévue pour venir en contact avec le côté principal tourné radialement vers l'intérieur (35) de la bande la plus interne radialement (32-1) de l'ensemble de bande (31) décrit au moins substantiellement une ligne droite dans la direction longitudinale de la courroie de transmission (3).

8. Courroie de transmission (3) selon l'une quelconque des revendications précédentes, **caractérisée en ce que**, au moins en l'absence d'une contrainte de traction dans les bandes (32), il existe un certain jeu dans la direction radiale entre les bandes séparées (32) de l'ensemble de bande (31).

**9.** Transmission à variation continue (1, 2, 3) pourvue de la courroie de transmission (3) selon l'une quelconque des revendications précédentes.

**FIG. 1**

**FIG. 2**

**FIG. 3**

**FIG. 4**

**FIG. 5**

**FIG. 6**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1221562 A
- NL 1023858
- EP 1219859 A
- EP 0626526 A